# DEMANDE DE BREVET EUROPEEN

(11) **EP 4 843 749 A1**
(43) Date de publication de la demande: **25.11.2026**
(21) Numéro de dépôt: 26176422.9
(22) Date de dépôt: 05.05.2026
(51) Int. Cl.: B29C 49/04, B29C 49/50, B65D 83/76, B05C 17/005, B29C 49/42

(54) **PROCEDE DE FABRICATION DE CARTOUCHE POUR LA DISTRIBUTION DE PRODUITS LIQUIDES OU SEMI-LIQUIDES ET MOULE CORRESPONDANT**

(30) Priorité: 21.05.2025 FR 2505447
(71) Demandeur: Frapak France SAS, 89100 Gron (FR)
(72) Inventeur: CORNIC, Gildas, 41100 NAVEIL (FR); DEMOL, Bertrand, 89100 SOUCY (FR)
(74) Mandataire: Ipsilon

(57) **Abrégé**

Procédé de fabrication d'une cartouche pour la distribution de produits liquides ou semi-liquides, formée d'un corps (1) pourvu, à une de ses extrémités (11), d'un goulot (10) destiné à être couplé à un couvercle (14), l'autre de ses extrémités (12) étant destinée à recevoir un piston mobile (13), le procédé de fabrication comprenant :
- la formation par extrusion-soufflage d'une pièce creuse : par extrusion (20) d'une paraison en matériau thermoplastique à base de polyoléfine, et soufflage (22) de la paraison emprisonnée dans un moule de manière à former la pièce creuse formée d'une portion fonctionnelle (30) et deux têtes perdues (31, 32) aux extrémités, la portion fonctionnelle (30) intégrant directement dans sa forme soufflée le corps (1) de la cartouche, et le goulot (10) de diamètre supérieur à 30 mm ; et
- découpe (25) des deux têtes perdues (31, 32)

## Description

### Domaine technique

La présente invention concerne un procédé de fabrication par extrusion-soufflage d'une cartouche destinée à contenir des produits liquides ou semi-liquides, notamment alimentaires tels que sauces, ou non-alimentaires, et destinée à être associée à un pistolet distributeur muni d'un piston ou plateau de poussée.

### Technique antérieure

Les cartouches de recharge utilisées pour la distribution de sauces, telles que mayonnaise ou ketchup, sur des hamburgers ou des produits analogues, sont largement utilisées dans l'industrie alimentaire, notamment dans la restauration rapide, pour le conditionnement de sauces froides telles que la mayonnaise. Une telle cartouche est par exemple présentée dans le document EP0860377A1.

En pratique, après formation du corps de la cartouche, un piston est inséré en bas du corps de la cartouche. La cartouche est ensuite conditionnée et livrée pour être remplie. Une fois remplie, la cartouche est fermée par un couvercle percé de plusieurs orifices. Lors de son utilisation sur le lieu de confection des hamburgers, la cartouche est insérée dans un pistolet distributeur conçu pour permettre la distribution de portions de sauce par simple appui sur la gâchette du pistolet distributeur. Ces pistolets sont de même principe que les pistolets à mastic. Le col de la cartouche qui doit recevoir ce couvercle percé présente un diamètre minimum de 60mm, afin de permettre une répartition uniforme de la sauce sur toute la surface du sandwich. Ce système de distribution de sauce froide offre l'avantage d'un gain de temps ainsi qu'un dosage précis et uniforme de la sauce.

Pour des raisons de coût et en raison de leur usage exclusif pour des sauces froides, ces cartouches sont fabriquées en polymère thermoplastique et notamment en PET (polyéthylène téréphtalate). En particulier, la cartouche PET est fabriquée par injection-soufflage et est produite avec une "fausse tête" (ou tête perdue) dans sa partie inférieure. Cette « fausse tête » est ensuite découpée pour obtenir la forme finale du produit, à savoir la cartouche.

Cependant, dans le cas de préparations nécessitant un remplissage à chaud ou un contact prolongé avec des substances chaudes, tel que fromage fondue, le PET n'est plus adapté. En effet, le PET perd ses propriétés mécaniques au-delà de 65°C. De plus, à haut température, il existe un risque de migration de substance vers le contenu.

Une cartouche en polyoléfine, par exemple en PEHD (polyéthylène haute densité) ou en PP (polypropylène) est alors plus appropriée pour ce type de température, et donc plus adaptée aux usages en contact avec des produits chauds.

La production en injection-soufflage de cartouche en PEHD ou PP est techniquement possible, mais le prix de revient est beaucoup trop élevé pour le secteur de la restauration rapide. La production par extrusion-soufflage est plus adaptée pour ce type de matériau. Cependant, l'extrusion-soufflage ne permet pas d'obtenir directement un col de très grand diamètre, notamment supérieur à 30mm, de préférence supérieur ou égal à 35mm, ou supérieur à 60 mm, en calibrage direct au niveau des deux extrémités de la pièce soufflée. En effet, lors du processus d'extrusion-soufflage, la paraison doit être maintenue dans le moule par son orifice supérieur, ce qui nécessite que ce dernier soit de diamètre plus petit (bien inférieur à 30 ou 35 mm) afin de permettre la fermeture du moule pendant la phase de soufflage.

### Exposé de l'invention

L'objet de la présente invention vise donc à répondre à ce problème technique propre au procédé d'extrusion-soufflage.

L'invention a ainsi pour objet un procédé de fabrication d'une cartouche pour la distribution de produits liquides ou semi-liquides, par exemple sauces, la cartouche étant formée d'un corps cylindrique pourvu, à une de ses extrémités, d'un goulot destiné à être couplé à un couvercle, tel qu'un couvercle de distribution, l'autre de ses extrémités étant destinée au remplissage et à recevoir un piston mobile ou un fond mobile. Le procédé de fabrication comprend au moins :
- la formation par extrusion-soufflage d'une pièce creuse, comprenant :
   - l'extrusion d'une paraison en matériau thermoplastique à base de polyoléfine, tel que le polyéthylène haute densité (PEHD) ou le polypropylène (PP) ;
   - l'emprisonnement de la paraison entre les demi-coquilles d'un moule ; et
   - le soufflage de la paraison encore chaude de manière à former la pièce creuse épousant les parois du moule, ladite pièce creuse comprenant une portion fonctionnelle et deux têtes perdues aux extrémités opposées de ladite portion fonctionnelle, la portion fonctionnelle intégrant directement dans sa forme soufflée ledit corps cylindrique de la cartouche, et ledit goulot formé dans le prolongement du corps, ledit goulot présentant un diamètre supérieur à 30 mm, de préférence supérieur ou égal à 35mm; et
- découpe des deux têtes perdues pour dégager le goulot et ouvrir l'extrémité de remplissage avant insertion du piston ou du fond mobile.

En d'autres termes, la cartouche est fabriquée en extrusion-soufflage et est en matériau thermoplastique compatible avec le contact de produits chauds, notamment en matériau thermoplastique à base de polyoléfine, tel que le PEHD ou le PP. En outre, le goulot de la cartouche est directement soufflé lors du processus de soufflage de la paraison dans le moule et est formé dans sa géométrie fonctionnelle par le moule, notamment son grand diamètre dont la dimension est telle qu'elle ne peut être obtenue directement par extrusion-soufflage classique. Le diamètre du goulot soufflé correspond au diamètre final prédéfini du goulot de la cartouche.

Ainsi, contrairement aux solutions existantes dans lesquelles le goulot est obtenu par simple découpe d'un cylindre pour former une simple ouverture, sans forme spécifique créée par le moule, ou par surmoulage ou ajout de pièce rapportée, le goulot de la cartouche de l'invention est de grand diamètre et n'est pas une pièce rapportée ou une pièce formée séparément, mais fait partie intégrante de la pièce soufflée. La solution de l'invention offre l'avantage d'un goulot propre, robuste et reproductible.

Le goulot (ou col) de la cartouche réalisée lors du soufflage présente un grand diamètre, de préférence au moins 60mm de diamètre, et peut avantageusement intégrer directement des moyens de fixation d'un bouchon ou d'un couvercle de distribution par exemple. Ces moyens de fixation peuvent être sous la forme de pas de vis, d'ergots ou de bourrelets pour une fixation par clipsage, etc.

En d'autres termes, le goulot de la cartouche est directement formé lors du soufflage de la paraison dans le moule, sa géométrie fonctionnelle étant définie par le moule, notamment en ce qui concerne son grand diamètre et les moyens de fixation.

En pratique, le procédé comprend en outre, après découpe des deux têtes perdues, l'insertion d'un piston mobile ou d'un fond mobile à l'extrémité opposée au goulot.

En pratique, après remplissage de la cartouche, un couvercle est fixé au goulot. Ce couvercle peut être un couvercle de distribution, de préférence percé d'orifices calibrés pour permettre la distribution d'un volume prédéfini de sauce au travers de ces orifices, à chaque appui sur la gâchette du pistolet.

L'invention peut également avoir pour objet une cartouche de distribution de produits liquides ou semi-liquides, en matériau thermoplastique à base de polyoléfine, tel que le polyéthylène haute densité (PEHD) ou le polypropylène (PP), obtenue par le procédé de fabrication décrit ci-dessus.

La cartouche en matériau thermoplastique à base de polyoléfine ainsi obtenue peut naturellement être utilisée pour contenir tout produit adapté, alimentaire ou non-alimentaire, chaud ou froid.

Les dimensions d'une cartouche pour la distribution de sauce dans la restauration rapide sont généralement standardisées. A titre d'exemple :
- diamètre du corps cylindrique : entre 50 et 90 mm ;
- hauteur totale de la cartouche : entre 120 et 200 mm ;
- diamètre du goulot (ou col) : typiquement entre 60 et 65 mm ;
- hauteur du goulot : entre 11 et 25 mm ;
- épaisseur de la paroi de la cartouche : entre 0,3 à 0,7 mm selon usage ;
- volume de contenu : typiquement entre 200 et 500 ml.

En pratique, le diamètre du corps cylindrique peut être supérieur au diamètre du goulot.

L'invention peut également avoir pour objet une pièce creuse formée d'un seul tenant par extrusion-soufflage d'une paraison en matériau thermoplastique à base de polyoléfine, tel que le polyéthylène haute densité (PEHD) ou le polypropylène (PP), ladite pièce étant destinée à constituer une cartouche de distribution de produits liquides ou semi-liquides, par exemple alimentaires tels que des sauces, configurée pour être montée sur un pistolet distributeur muni d'un piston, la pièce creuse comprenant :
- une portion fonctionnelle formée d'un corps cylindrique creux configuré pour contenir le produit à distribuer, d'un goulot de distribution à une extrémité du corps, de diamètre supérieur à 30mm, de préférence supérieur ou égal à 35mm, par exemple au moins 60mm de diamètre, formé directement par soufflage de la paraison dans un moule, ledit goulot étant destiné à recevoir un couvercle de distribution, et une extrémité opposée du corps étant ouverte pour l'insertion d'un piston mobile ou d'un fond mobile ; et
- deux têtes perdues, formées au-delà du goulot et de l'extrémité opposée, destinées à être découpées après moulage.

Avantageusement, le goulot présente un diamètre d'au moins 60mm, et peut avantageusement intégrer directement des moyens de fixation d'un bouchon ou d'un couvercle par exemple. Ces moyens de fixation peuvent être sous la forme de pas de vis, d'ergots ou de bourrelets pour une fixation par clipsage, etc.

L'invention peut également avoir pour objet un moule destiné à la fabrication, par extrusion-soufflage, d'une cartouche de distribution de produits liquides ou semi-liquides, ladite cartouche comprenant un corps cylindrique, un goulot de distribution d'au moins 30 mm de diamètre, de préférence supérieur ou égal à 35mm (par exemple au moins 60mm de diamètre) à une première extrémité du corps, et une ouverture destinée à recevoir un piston à l'autre extrémité, le moule comprenant deux demi-coquilles configurées pour :
- enfermer une paraison extrudée en matériau thermoplastique à base de polyoléfine, tel que le polyéthylène haute densité (PEHD) ou le polypropylène (PP), et
- former, lors du soufflage, le corps creux cylindrique, le goulot directement soufflé, solidaire du corps cylindrique, et deux têtes perdues, l'une située au-delà du goulot et l'autre au-delà de l'extrémité opposée du corps.

Ainsi, les parois internes du moule définissent le profil exact du corps, du goulot et des deux têtes perdues, de manière à permettre leur découpe ultérieure sans usinage complémentaire du goulot.

Avantageusement, les demi-coquilles définissent ensemble une cavité de moulage interne épousant la forme extérieure de la pièce à réaliser, ladite cavité comprenant successivement, dans le sens axial :
- une empreinte de tête perdue supérieure, destinée à être éliminée après moulage ;
- une empreinte de goulot fonctionnel, présentant un diamètre correspondant au diamètre prédéfini du goulot de la cartouche, notamment d'au moins 30 mm, de préférence supérieur ou égal à 35mm, cette empreinte intégrant des détails fonctionnels pour former des moyens de fixation d'un couvercle ;
- une empreinte de corps cylindrique, de forme tubulaire, correspondant à la cavité principale de la cartouche destinée à recevoir le produit ; et
- une empreinte de tête perdue inférieure, également destinée à être éliminée après moulage.

Les deux têtes perdues sont ainsi formées par des extensions creuses prévues aux extrémités du moule, au-delà des contours de la portion fonctionnelle, ces extensions étant configurées pour faciliter la découpe ultérieure des têtes perdues.

Avantageusement, le moule peut en outre intégrer des dispositifs de découpe d'une tête perdue, de préférence de la tête perdue inférieure, ou des deux têtes perdues, avant démoulage. En pratique, le dispositif de découpe peut être sous la forme d'une lame montée sur vérin.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
[Fig 1] est une vue en demi-coupe d'une représentation schématique d'une cartouche pour la distribution de sauce, munie d'un couvercle et d'un piston mobile, selon un mode de réalisation.
[Fig 2] est une représentation schématique des étapes du procédé de fabrication selon un mode de réalisation.
[Fig 3] est une représentation schématique d'une pièce creuse soufflée obtenue avec le procédé de l'invention selon un mode de réalisation.
[Fig 4] est une représentation schématique de la pièce creuse soufflée de la figure 3 séparée des têtes perdues.

### Description des modes de réalisation

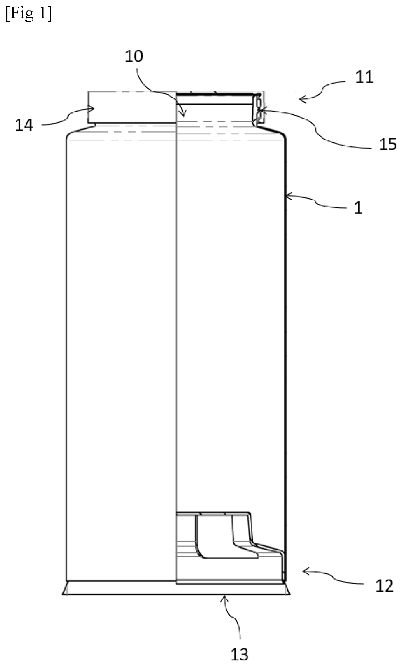

L'invention concerne un procédé de fabrication d'une cartouche de distribution, en particulier destinée à contenir des produits liquides ou semi-liquides, par exemple alimentaires tels que des sauces chauds ou froids. La cartouche est représentée à la figure 1 et est notamment constituée d'un corps creux monobloc 1, formé d'un matériau thermoplastique à base de polyoléfine, tel que du polyéthylène haute densité (PEHD) ou du polypropylène (PP), présentant une bonne tenue mécanique à chaud. Le corps creux 1 est cylindrique et intègre à une extrémité 11, un goulot 10 de diamètre prédéfini, par exemple au moins égal à 60mm, l'autre extrémité opposée **12** étant ouverte et recevant un piston mobile **13** (ou un fond mobile) fermant cet extrémité opposée **12.** Le goulot **10** est couplé à un couvercle **14.** Le goulot **10** peut intégrer des moyens de fixation **15** du couvercle **14.** Ces moyens de fixation **15** peuvent être présents sur la périphérie externe du goulot **10.** Ces moyens de fixation **15** peuvent par exemple être sous la forme de pas de vis, de filetage, ou encore d'ergots ou bourrelets autorisant la fixation par clipsage du couvercle sur le goulot. La cartouche est destinée à être insérée dans un pistolet distributeur (non illustré) conçu pour permettre la distribution de portions de sauce contenue dans la cartouche au niveau du goulot par simple appui sur la gâchette du pistolet distributeur. Le couvercle peut être percé de plusieurs orifices calibrés pour distribuer un volume de produit prédéfini à chaque appui sur la gâchette.

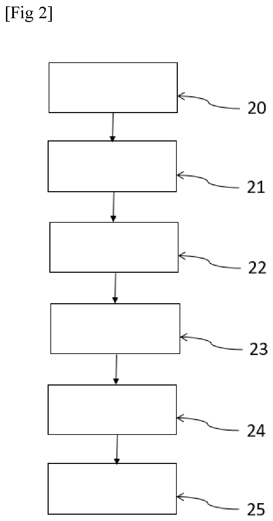

La cartouche est obtenue par un procédé d'extrusion-soufflage d'une pièce creuse monobloc, et comprend notamment les étapes représentées à la figure 2 :
**20** : Extrusion d'une paraison : une paraison tubulaire en matériau thermoplastique à base de polyoléfine, tel que du polyéthylène haute densité (PEHD) ou du polypropylène (PP), est extrudée verticalement à partir d'un extrudeur. La paraison présente une longueur suffisante pour former la pièce creuse dans son intégralité, y compris deux extensions aux extrémités qui donneront lieu à la formation de deux têtes perdues.
**21** : Emprisonnement de la paraison dans un moule adapté : la paraison est introduite entre deux demi-coquilles d'un moule d'extrusion-soufflage, lesquelles se referment pour emprisonner la paraison. Le moule présente une cavité définissant une portion fonctionnelle et deux extensions aux extrémités supérieure et inférieure de la portion fonctionnelle, correspondant à deux têtes perdues. La portion fonctionnelle définit la forme extérieure de la cartouche, notamment la forme du corps cylindrique creux destiné à contenir le produit, ainsi que la forme du goulot s'étendant à l'une des extrémités du corps creux et présentant un diamètre correspondant d'ores et déjà au diamètre final souhaité (par exemple au moins 60 mm) ainsi que d'éventuels moyens de fixation.
**22** : soufflage de la paraison : de l'air comprimé est insufflé à l'intérieur de la paraison par l'ouverture supérieure du moule, de façon à plaquer la matière thermoplastique encore chaude contre les parois internes de la cavité du moule. La paraison épouse alors les contours du moule, formant une pièce creuse monobloc. Le goulot de la cartouche est ainsi directement formé par soufflage avec la dimension finale souhaitée en termes de diamètre, sans nécessité un usinage, un assemblage, ou une reprise ultérieure.
**23** : refroidissement : la pièce creuse soufflée est généralement maintenue dans le moule pendant une durée suffisante pour assurer un refroidissement et une solidification partielle ou complète du matériau.
**24** : ouverture du moule et éjection de la pièce : une fois la pièce refroidie, les demi-coquilles du moule s'ouvrent et la pièce soufflée est éjectée.

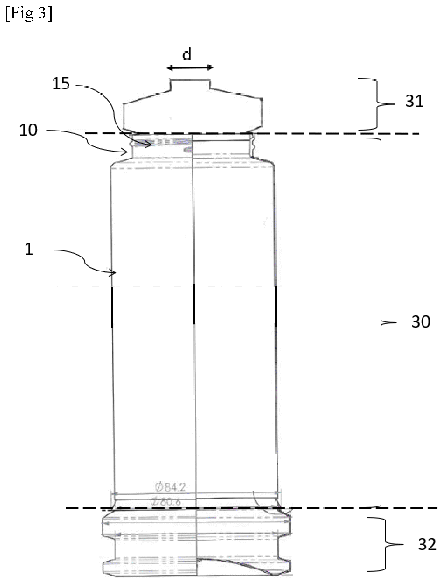

La pièce creuse **3** soufflée éjectée est représentée à la figure 3. Elle comprend ainsi la portion fonctionnelle **30** et les deux têtes perdues **31, 32** s'étendant aux extrémités respectives de la portion fonctionnelle **30.** Le diamètre de l'extrémité libre de la tête perdue **31** par laquelle l'air de soufflage est injecté présente un diamètre maximum de 28mm. La portion fonctionnelle **30** définit la forme extérieure de la cartouche, notamment la forme du corps **1** cylindrique creux destiné à contenir le produit, et la forme du goulot **10** s'étendant à l'une des extrémités du corps creux **1** et présentant un diamètre d'au moins 60 mm.

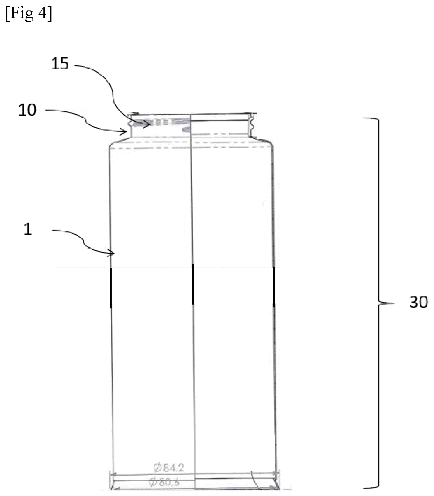

**25** : découpe des têtes perdues : les deux extrémités de la pièce, correspondant aux têtes perdues, sont ensuite découpées. Cette découpe libère à une première extrémité, un goulot fonctionnel, de grand diamètre, pouvant recevoir directement un couvercle de distribution, éventuellement muni de moyens de fixation (pas de vis, clip, crantage, etc.), et à l'autre extrémité, une ouverture circulaire, apte à recevoir un piston mobile destiné à pousser le produit contenu dans la cartouche. La pièce creuse séparée des deux têtes perdues est illustrée à la figure 4.

Bien entendu, lorsque le moule intègre des dispositifs de découpe de tête perdue, la découpe d'une et des deux têtes perdues peuvent être réalisée avant ouverture du moule et éjection de la pièce.

L'ensemble du corps **1,** y compris le goulot **10,** est ainsi formé d'un seul tenant par soufflage, sans pièces rapportées ni assemblage ultérieur, ce qui confère à la cartouche une excellente intégrité structurelle, une étanchéité naturelle, et une bonne reproductibilité industrielle.

Le moule adapté pour la fabrication par extrusion-soufflage de la cartouche à goulot soufflé de grand diamètre, notamment d'au moins 60mm de diamètre, peut être sous la forme de deux demi-coquilles configurées pour :
- enfermer une paraison extrudée en matériau thermoplastique à base de polyoléfine, tel que le polyéthylène haute densité (PEHD) ou le polypropylène (PP), et
- former, lors du soufflage le corps creux cylindrique, le goulot directement soufflé, solidaire du corps cylindrique, et deux têtes perdues, l'une située au-delà du goulot et l'autre au-delà de l'extrémité opposée du corps.

Les demi-coquilles définissent ensemble une cavité de moulage interne épousant la forme extérieure de la pièce à réaliser. Cette cavité peut comprendre successivement, dans le sens axial :
- une empreinte de tête perdue supérieure, destinée à être éliminée après moulage ;
- une empreinte de goulot fonctionnel, présentant un diamètre correspondant au diamètre final souhaité, par exemple au moins 60 mm, cette empreinte pouvant intégrer des détails fonctionnels comme des reliefs pour former un pas de vis, des crantages ou ergots de verrouillage ;
- une empreinte de corps cylindrique, de forme tubulaire, correspondant à la cavité principale de la cartouche destinée à recevoir le produit ; et
- une empreinte de tête perdue inférieure, également destinée à être éliminée après moulage.

Le moule peut comporter un canal d'introduction d'air comprimé dans la partie supérieure, permettant l'insufflation dans la paraison pour la plaquer contre les parois de la cavité. Le moule peut également intégrer des dispositifs de découpe d'une tête perdue, ou des deux têtes perdues, avant démoulage.

La solution présentée permet ainsi de former un goulot de grand diamètre et notamment d'au moins 60 mm de diamètre, directement par soufflage, ce qui est inhabituel pour les procédés classiques d'extrusion-soufflage. La solution de l'invention permet de la suppression des étapes de reprise ou d'assemblage de pièces rapportées, la compatibilité avec des matériaux adaptés au remplissage à chaud, et la réduction des coûts par rapport à des cartouches injectées-soufflées ou assemblées.

## Revendications

1. Procédé de fabrication d'une cartouche pour la distribution de produits liquides ou semi-liquides, la cartouche étant formée d'un corps (1) cylindrique pourvu, à une de ses extrémités (11), d'un goulot (10) destiné à être couplé à un couvercle (14), l'autre de ses extrémités (12) étant destinée au remplissage et à recevoir un piston mobile (13), le procédé de fabrication comprenant au moins :
- la formation par extrusion-soufflage d'une pièce creuse, comprenant :
. l'extrusion (20) d'une paraison en matériau thermoplastique à base de polyoléfine, tel que le polyéthylène haute densité (PEHD) ou le polypropylène (PP) ;
. l'emprisonnement (21) de la paraison entre les demi-coquilles d'un moule ; et
. le soufflage (22) de la paraison encore chaude de manière à former la pièce creuse épousant les parois du moule, ladite pièce creuse comprenant une portion fonctionnelle (30) et deux têtes perdues (31, 32) aux extrémités opposées de ladite portion fonctionnelle (30), la portion fonctionnelle (30) intégrant directement dans sa forme soufflée ledit corps (1) cylindrique de la cartouche, et ledit goulot (10) formé dans le prolongement du corps (1), ledit goulot (10) présentant un diamètre supérieur à 30 mm ; et
- découpe (25) des deux têtes perdues (31, 32) pour dégager le goulot et ouvrir l'extrémité de remplissage avant insertion du piston.

2. Procédé de fabrication selon la revendication 1, dans lequel le goulot (10) réalisé lors du soufflage présente un grand diamètre d'au moins 60mm.

3. Procédé de fabrication selon la revendication 1 ou 2, dans lequel le goulot (10) soufflé intègre directement des moyens de fixation d'un couvercle.

4. Procédé de fabrication selon la revendication 3, dans lequel les moyens de fixation sont sous la forme de pas de vis, d'ergots ou de bourrelets de clipsage.

5. Procédé de fabrication selon l'une des revendications 1 à 4, comprend en outre, après découpe des deux têtes perdues (31, 32), l'insertion d'un piston mobile (13) à l'extrémité opposée au goulot (10).

6. Moule destiné à la fabrication, par extrusion-soufflage, d'une cartouche de distribution de produits liquides ou semi-liquides, notamment alimentaires, ladite cartouche comprenant un corps (1) cylindrique, un goulot (10) de distribution d'au moins 30 mm de diamètre à une première extrémité du corps (1), et une ouverture à l'autre extrémité destinée à recevoir un piston (13), le moule comprenant deux demi-coquilles configurées pour :
- enfermer une paraison extrudée en matériau thermoplastique à base de polyoléfine, tel que le polyéthylène haute densité (PEHD) ou le polypropylène (PP), et
- former, lors du soufflage, le corps (1) creux cylindrique, le goulot (10) directement soufflé, solidaire du corps cylindrique (1), et deux têtes perdues (31, 32), l'une située au-delà du goulot (10) et l'autre au-delà de l'extrémité opposée du corps (1).

7. Moule selon la revendication 6, dans lequel les demi-coquilles définissent ensemble une cavité de moulage interne épousant la forme extérieure de la pièce à réaliser, ladite cavité comprenant successivement, dans le sens axial :
- une empreinte de tête perdue supérieure, destinée à être éliminée après moulage ;
- une empreinte de goulot fonctionnel, présentant un diamètre d'au moins 30 mm, cette empreinte intégrant des détails fonctionnels former des moyens de fixation d'un couvercle ;
- une empreinte de corps cylindrique, de forme tubulaire, correspondant à la cavité principale de la cartouche destinée à recevoir le produit ; et
- une empreinte de tête perdue inférieure, également destinée à être éliminée après moulage.

8. Moule selon la revendication 6 ou 7, comprenant en outre des dispositifs de découpe d'une tête perdue ou des deux têtes perdues, avant démoulage.
